# EUROPÄISCHE PATENTANMELDUNG

(11) **EP 2 278 294 A1**
(43) Veröffentlichungstag der Anmeldung: **26.01.2011**
(21) Anmeldenummer: 09003404.2
(22) Anmeldetag: 09.03.2009
(51) Int. Cl.: G01N 1/10, B65D 75/58

(54) **Probenahmevorrichtung**

(71) Anmelder: INDAG Gesellschaft für Industriebedarf mbH & Co. Betriebs KG, 69214 Eppelheim (DE)
(72) Erfinder: Tilz, Wolfgang, 68723 Schwetzingen (DE); Wild, Hans-Peter, Dr., 69214 Eppelheim (DE)
(74) Vertreter: Grünecker, Kinkeldey, Stockmair & Schwanhäusser Anwaltssozietät

(57) **Zusammenfassung**

Es wird eine Probenahmevorrichtung (1, 100, 200) zum Entnehmen von Proben aus und/oder zum Einfüllen von Proben in einen Beutel (5, 27), der eine mit einem Spund (7) versehene Öffnung und ein Verschlussteil (8) aufweist, das derart angeordnet ist, dass die Öffnung (6) von der Innenseite des Beutels (5, 27) her zu öffnen und zu schließen ist, beschrieben. Um diese Probenahmevorrichtung universeller einsetzbar zu machen, wird eine Einrichtung zum Öffnen und Wiederverschließen der Öffnung (6) vorgeschlagen, die jeweils eine Halteeinrichtung (2, 3) für den Spund (7) und das Verschlussteil (8) aufweist, die unter Freihaltung eines den Beutel (5, 27) aufnehmenden Spaltes (4) miteinander verbunden und über einen Betätigungsmechanismus relativ zueinander bewegbar sind.

## Beschreibung

Die Erfindung bezieht sich auf eine Probenahmevorrichtung der im Oberbegriff von Anspruch 1 erläuterten Art.

Eine derartige Probenahmevorrichtung ist aus der WO 2007/118676 bekannt. Die bekannte Probenahmevorrichtung ist für eine Entnahme von Proben fließfähiger Medien aus einem produktführenden Hohlraum, wie beispielsweise einer Rohrleitung ausgebildet. Die Probenahmevorrichtung ist zu diesem Zweck permanent mit der Leitung verbunden und kann nur zum Entnehmen von Proben aus dieser Leitung und der vorbestimmten Stelle eingesetzt werden. Die gezogenen Proben werden in Beutel eindosiert, wie sie beispielsweise in der WO 87/00146 beschrieben sind. Derartige Beutel enthalten einen eine Befüllöffnung umgebenden Spund, in den ein Verschlussteil eingedrückt wird, das an der Innenseite des Behälters an der dem Spund gegenüberliegenden Beutelwandung vorsteht. Zum Öffnen dieser Beutel wird der Beutel mit seinem Spund an einem Rohrstutzen oder dgl. befestigt und das Verschlussteil aus dem festgeklemmten Spund herausgezogen, wobei ein spreizbarer Aufnahmedorn in eine im Verschlussteil vorgesehene, nach außen offene Ausnehmung eingreift und das Verschlussteil aus dem Spund zieht. Auch hier ist das Öffnen und Wiederverschließen der Beutel mit einem höheren Aufwand verbunden, und insbesondere nur stationär möglich.

Der Erfindung liegt die Aufgabe zugrunde, eine universell und mobil einsetzbare Probenahmevorrichtung bereitzustellen.

Die Aufgabe wird durch die im Anspruch 1 angegebenen Merkmale gelöst.

Durch die erfindungsgemäße Ausgestaltung, in der jeweils eine Halteeinrichtung für den Spund und eine Halteeinrichtung für das Verschlussteil zu einer mobilen Einrichtung zum Öffnen und Wiederverschließen der Beutelöffnung kombiniert sind, wobei die beiden Halteeinrichtungen relativ zueinander bewegbar sind, wird eine Probenahmevorrichtung geschaffen, die mobil ist und überall dort einsetzbar ist, wo eine Probenahme gewünscht und erforderlich ist. Die erfindungsgemäße Probenahmevorrichtung eignet sich besonders zum Entnehmen von Proben an unterschiedlichen Stellen im Produktkreislauf oder aus einem Behälter, wie beispielsweise einem Beutel oder dgl.

Vorteilhafte Weiterbildungen sind den Unteransprüchen zu entnehmen.

Die Halteeinrichtungen für den Spund und das Verschlussteil sind beim Befüllen und/oder Entleeren von Beuteln der in der WO87/00146 beschriebenen Art konventionell ausgestaltet, können jedoch, auch für die Verwendung anderer Beutel, entsprechend modifiziert werden.

Die Relativbewegung zwischen den beiden Halteeinrichtungen erfolgt bevorzugt über ein axial verschiebbares Element, das mit einer der Halteeinrichtungen mitnehmend verbunden ist.

Es ist weiterhin zweckmäßig, wenn eine der Halteeinrichtungen mit einer Entleerungs- und/oder Befülleinrichtung für die Probe in Fließverbindung steht, sodass auch die dort bevorzugt vorgesehen Sterilisierungseinrichtungen, wie beispielsweise Anschlüsse für Dampf oder Desinfektionsmittel, in die Probenahmevorrichtung integriert werden können.

Die erfindungsgemäße Probenahmevorrichtung kann an die unterschiedlichsten Anwendungszwecke konstruktiv angepasst werden. So kann beispielsweise die Probenahmevorrichtung als mobiles Handgerät ausgebildet sein, das überall dort angedockt und wieder entfernt werden kann, wo Probenahmestutzen vorgesehen sind. In dieser Ausgestaltung dient die erfindungsgemäße Probenahmevorrichtung zum Abfüllen einer Probe in einen Beutel der oben beschriebenen Art.

Die Probenahmevorrichtung kann jedoch auch als kraftbetätigtes Gerät ausgebildet sein, die wie beim Handgerät beschrieben, eingesetzt werden kann, oder mit Hilfe eines Adapters mit einem Behälter verbunden werden kann, der einen mit Produkt befüllten Beutel enthält, aus dem eine Probe gezogen werden soll. Die Erfindung eignet sich besonders zum Entnehmen von Proben aus einem Beutel, der in herkömmliche 200 I Fässer verpackt ist.

Bei den bevorzugt eingesetzten Beuteln besteht das Problem, dass bei verschlossenem Beutel die Stirnfläche des Verschlussteils im Spund freiliegt und somit das Produkt kontaminieren kann, sobald das Verschlussteil zum Öffnen in den Beutel gezogen wird. Um dies zu verhindern, werden die Beutel, die sich besonders für eine Probenahmevorrichtung der beschriebenen Art eignen, zusammen mit einer sterilen Abdeckung verwendet, die die Stirnfläche des Verschlussteils gegen Kontamination schützt. Die Abdeckung enthält bevorzugt eine mit einem Desinfektionsmittel getränkte Einlage. Auf diese Weise ist es möglich, Beutel beispielsweise mehrfach zu öffnen und wieder zu verschließen, ohne dass Gefahr besteht, dass das Produkt kontaminiert wird.

Ausführungsbeispiele der Erfindung werden nachfolgend anhand der Zeichnungen näher erläutert. Es zeigen:
- Fig. 1: ein erstes Ausführungsbeispiel einer erfindungsgemäßen Probenahmevorrichtung in stark schematisierter Darstellung,
- Fig. 2: ein zweites Ausführungsbeispiel einer erfindungsgemäßen Probenahmevorrichtung in stark schematisierter Darstellung,
- Fig. 3: ein drittes Ausführungsbeispiel einer erfindungsgemäßen Probenahmevorrichtung in stark schematisierter Darstellung,
- Fig. 4: die Draufsicht auf ein Ausführungsbeispiel eines verwendeten Beutels,
- Fig. 5: einen Querschnitt durch die Ausgestaltung eins Beutels im Bereich seiner Öffnung,
- Fig. 6: eine auseinandergezogene Darstellung von Bestandteilen der Beutelöffnung, und
- Fig. 7: einen Querschnitt durch eine Abdeckung.

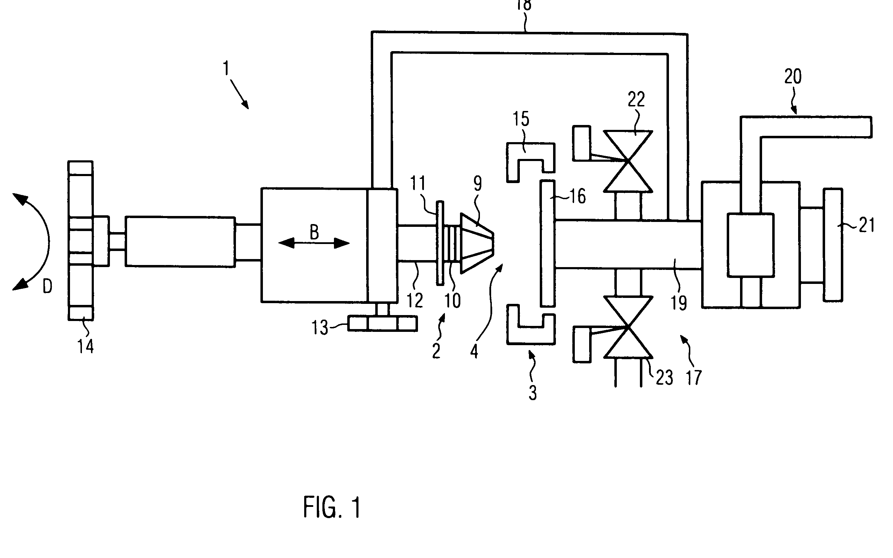

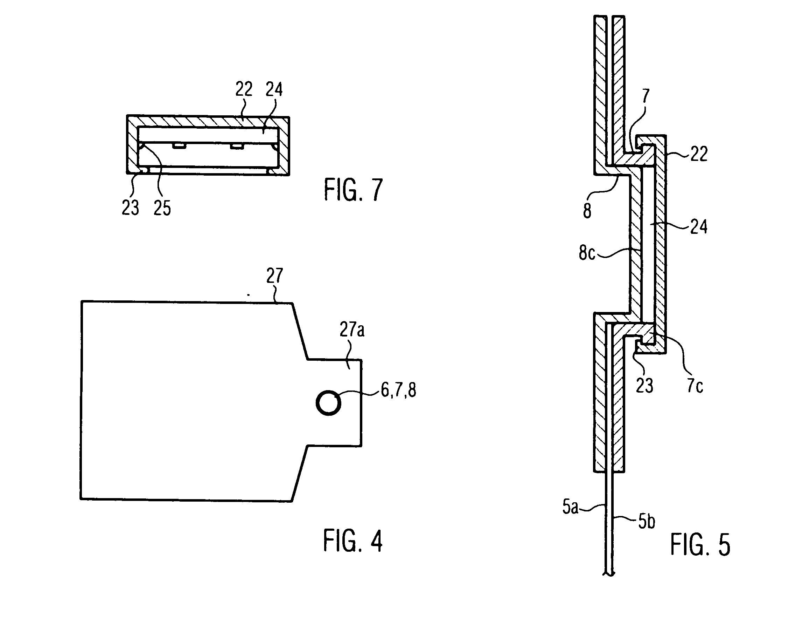

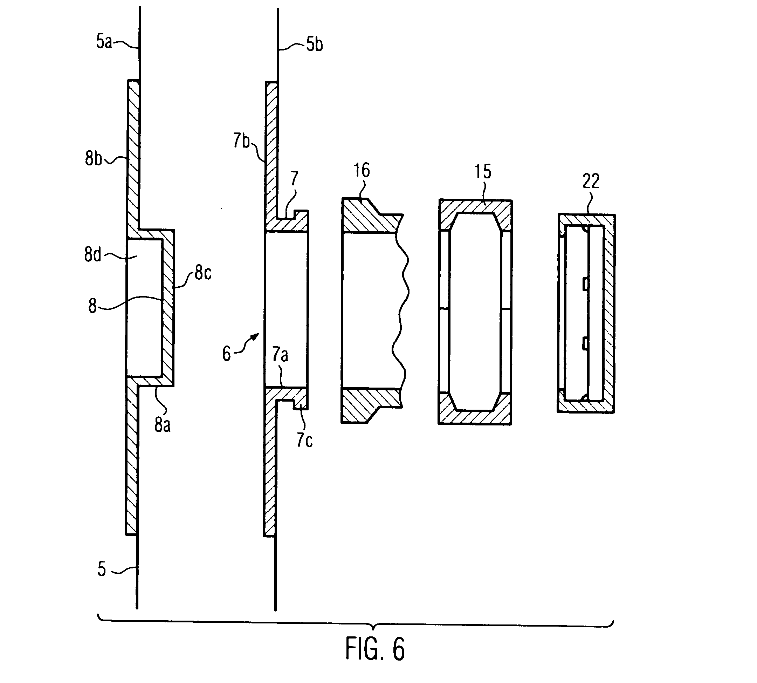

Fig. 1 zeigt eine erfindungsgemäße Probenahmevorrichtung 1, die im dargestellten Ausführungsbeispiel als handbetätigtes Gerät ausgebildet ist. Die Probenahmevorrichtung 1 enthält eine erste Halteeinrichtung 2 und eine zweite Halteeinrichtung 3 mit einem dazwischen vorgesehenen Spalt 4, in dem beispielsweise der in den Fig. 5 und 6 teilweise dargstellte und in der WO 87/00146 beispielhaft und eingehender beschriebene Beutel 5 aufgenommen werden kann. Der Beutel 5 enthält zwei gegenüberliegende Seitenwände 5a und 5b, die umfangsseitig ringsum verschlossen sind. Die Seitenwände des Beutels 5a, 5b bestehen aus einer flexiblen und trotzdem reißfesten und mechanisch belastbaren Kunststofffolie. In einer der Seitenwände 5b ist eine Einfüll- und Auslassöffnung 6 vorgesehen, der ein Spund 7 aus Kunststoff zugeordnet ist. Der Spund 7 steht mit einem Rohrabschnitt 7a über die Seitenwand 5b vor und ist mit einem Befestigungsteller 7b mit der Seitenwand 5b rund um die Öffnung 6 verbunden, bevorzugt verschweißt. Der Rohrabschnitt 7a endet im Abstand von der Seitenwand 5b in einem radial nach außen vorstehenden Befestigungsflansch 7c, der mit der Halteeinrichtung 3 zusammenpasst.

An der der Öffnung 6 gegenüberliegenden Stelle der zweiten Seitenwand 5a ist ein Verschließteil 8 aus Kunststoff befestigt, das mit einem Rohrabschnitt 8a in Richtung auf die Öffnung 6, d. h. in das Innere des Beutels 5, vorsteht und ebenfalls mit einem Befestigungsteller 8b an der Seitenwand 5a befestigt, bevorzugt verschweißt ist. Der Rohrabschnitt 8a endet in einer geschlossenen Stirnfläche 8c. Der Außendurchmesser des Rohrabschnittes 8a ist derart an den Innendurchmesser des Rohrabschnittes 7a des Spundes 7 angepasst, dass das Verschließteil 8 abdichtend durch die Öffnung 6 hindurch und in den Rohrabschnitt 7a des Spundes 7 hineingedrückt werden kann. Gegebenenfalls können Dichtungen oder Dichtrippen oder andere Ausgestaltungen zwischen dem Verschließteil 8 und dem Spund 7 vorgesehen sein, die sicherstellen, dass die Öffnung 6 fest und strömungsdicht verschlossen ist, wenn das Verschließteil 8 in den Spund 7 eingedrückt wurde, wie dies beispielsweise in Fig. 5 zu sehen ist.

An der der Stirnseite 8c abgewandten Rückseite, d. h. außerhalb des Beutels 5, enthält das Verschließteil 8 eine Ausnehmung 8d, die mit der Halteeinrichtung 2 der Probenahmevorrichtung 1 gemäß Fig. 1 derart zusammenpasst, dass das Verschließteil 8 durch die Halteeinrichtung 2 mitnehmend verbunden werden kann.

Im bevorzugten Ausführungsbeispiel enthält die Halteeinrichtung 2 eine spreizbare Aufnahme 9, die über eine Feder 10, die sich an einem Gegenlager 11 abstützt, in Richtung des Doppelpfeiles B federnd gelagert ist. Die Aufnahme 9 sitzt auf einer Spindel 12, die manuell in Richtung des Doppelpfeiles B axial verschiebbar ist. Die Axialstellung der Spindel 12 kann durch eine Arretierungseinrichtung 13, dargestellt ist eine Stellschraube, arretiert werden. In der Spindel 12 sind weiterhin, in der Zeichnung nicht dargestellt, die Betätigungselemente für das Spreizen und Zusammenführen der spreizbaren Aufnahme 9 untergebracht. Diese Betätigungselemente reagieren bevorzugt auf eine Drehung D um die Achse der Spindel 12, die durch ein Handrad 14 manuell durchgeführt werden kann. Mit Hilfe des Handrads 14 wird somit sowohl die Spindel 12 und die Aufnahme 9 in Richtung des Pfeiles B axial bewegt, als auch die Aufnahme 9 durch Drehung D geöffnet und geschlossen.

Die zweite Halteeinrichtung 3 ist so ausgebildet, dass der Spund 7 mit seiner Öffnung 6 fixiert werden kann. Zu diesem Zweck enthält die Halteeinrichtung 3 bevorzugt eine Klammer 15, die so ausgebildet ist, dass sie sowohl über den Flansch 7c des Spundes 7 als auch über einen Befestigungsflansch 16 einer Einfüll- und Entleerungseinrichtung 17 passt und durch radiales oder umfangsseitiges Anziehen den Spund 7c gegen den Befestigungsflansch 16 presst.

Wie dargestellt, ist der Befestigungsflansch 16 und die Klammer 15 durch den Spalt 4 von der Aufnahme 9 getrennt, wobei dieser Spalt 4 durch einen Bügel 18 aufrecht erhalten wird, der die Spindel 12 mit der Befüll- und Entleerungseinrichtung 17 verbindet.

Die Befüll- und Entleerungseinrichtung 17 enthält einen bevorzugt in einem Rohrstück 19 ausgebildeten Hohlraum durch den das Produkt, absperrbar durch ein Handventil 20, über einen Auslaufstutzen oder eine Auslauföffnung 21 in oder aus dem Beutel fließen kann, die entweder an eine Leitung angeflanscht werden kann, oder in ein Aufnahmegefäß mündet oder mit einem Ansaugschlauch oder dgl. verbunden werden kann.

In das Rohrstück 19 mündet ein Einlassventil 22 und ein Auslassventil 23, wobei das Einlassventil 22 mit einer Zufuhr von Dampf, Sterilluft oder dgl. verbunden werden kann, um den Zwischenraum zwischen dem Handventil 20 und dem über die Klammer 15 angedockten Spund und der Stirnfläche 8c des Verschlussteiles zu sterilisieren. Der Anschluss 23 dient dem Ableiten von Kondensat. Zur Probenahme wird ein Beutel 5 in den Spalt 4 eingeführt und über den Spund 7 mit Hilfe der Klammer 15 am Befestigungsflansch 16 befestigt. Dann wird die Spindel 12 in Richtung des Pfeiles B vorgeschoben, bis die Aufnahme 9 in der Vertiefung 8d des Verschließteils aufgenommen wird. Diese Stellung wird über die Arretierungseinrichtung 13 arretiert. Dann wird der Handgriff 14 solange gedreht, bis die Aufnahme 9 in eine kraftübertragende Anpressung in der Ausnehmung 8d aufgenommen ist. Dann wird bei geschlossenem Handventil 20 und noch geschlossenem Beutel in den Zwischenraum zwischen Handventil 20 und Beutel Sterilluft und/oder Dampf mit 1-2 bar oder dgl. eingebracht, um den Spund und vor allen Dingen die Stirnfläche 8c des Verschließteiles 8 zu sterilisieren. Nach Beendigung der Sterilisation wird die Arretierung gelöst und die Aufnahme 9 mit angeklemmtem Verschließteil 8 zurückgezogen, bis das Verschließteil 8 aus dem Spund 7 herausgezogen wurde und die Öffnung 6 des Beutels 5 freigibt. Das Produkt kann dann über die Befüll- und Entleerungseinrichtung in der gewünschten Richtung fließen, also entweder den Beutel füllen oder eine Probe aus dem Beutel entnehmen, wie dies gewünscht wird.

Anschließend kann der Beutel 5 wieder verschlossen werden, indem das Verschließteil 8 durch die Aufnahme 9 wieder in den Spund 7 zum Verschließen der Öffnung 6 eingedrückt und anschließend die Aufnahme 9 gelöst und zurückgezogen wird. Dann wird auch die Klammer 15 gelöst und der Beutel 5 aus dem Spalt 4 entnommen. Um zu verhindern, dass der Spund 7 und vor allen Dingen die Stirnseite 8c vor einem nächsten Entnahme- oder Befüllvorgang des gleichen Beutels 5 kontaminiert wird, wird auf den Spund 7 eine Abdeckung 22 (Fig. 5 bis 7) aufgebracht. Die Abdeckung 22 kann als Schnappdeckel aus Kunststoff ausgebildet sein und einen Rastrand 23 aufweisen, mit dem der Flansch 7c des Spundes 7 hintergriffen wird. Die Abdeckung 22 enthält bevorzugt eine Einlage 24 für eine sterile Abdeckung der Stirnfläche 8c. Die Einlage 24 besteht bevorzugt aus einem Zuschnitt aus einem Kunststoffschwamm, bevorzugt ein Stanzteil aus PHUPUR-Etherschaum, RG, das mit einem Desinfektionsmittel getränkt ist. Gegen ein Herausfallen ist die Einlage 24 durch angespritzte Halterungen in Form von Kunststoffzähnen 25 untergriffen. Bevorzugt ist die Einlage 24 etwa 10 mm dick und die Abdeckung 22 so ausgebildet, dass die Einlage 24 auf etwa 7 mm zusammengepresst wird, wenn die Abdeckung 22 auf dem Spund 7 sitzt. Da die Abdeckung 22 eine gewisse Elastizität aufweisen sollte, besteht sie bevorzugt aus einem flexiblen Kunststoff, wie beispielsweise PE oder LDPE.

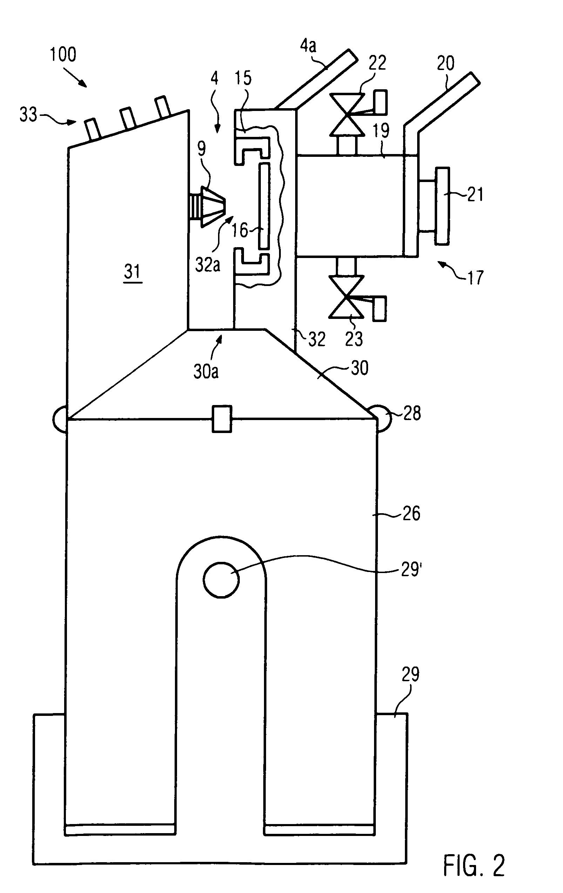

Fig. 2 zeigt ein weiteres Ausführungsbeispiel einer erfindungsgemäßen Probenahmevorrichtung 100. Die Probenahmevorrichtung 100 ist ein kraftbetätigtes Gerät und beispielsweise ausgelegt, um einen in einem festen Behälter 26 untergebrachten Beutel 27 (Fig. 4) zugänglich zu machen. Der Beutel 27 enthält einen Trichterdom 27a, der vom eigentlichen Beutel nach oben vorsteht und eine geringere Breite als der Rest des Beutels aufweist. Im Trichterdom 27a ist die Beutelöffnung 6 vorgesehen, die mit dem Spund 7 versehen und mit dem Verschließteil 8 verschließbar ist, wie dies bereits anhand des Beutels 5 beschrieben wurde.

Der Behälter 26 ist ein übliches, standardisiertes Stahlfass, beispielsweise ein 200 I Stahlfass, das einen über Klammern 28 verschließbaren Deckel aufweist. In Fig. 2 ist der Behälter 26 in eine Halterung 29 eingesetzt, mit der der Behälter 26 um eine im Wesentlichen horizontale Achse 29', bevorzugt zwischen 90-120°, verschwenkbar ist.

Die Probenahmevorrichtung 100 weist einen Adapter 30 in Form eines Trichters auf, der anstelle des Deckels über die Klammern 28 am Behälter 26 befestigt werden kann. Der Adapter 30 weist eine obere Öffnung 30a auf, durch die der Trichterdom 27a des Beutels 27 hindurchgezogen wird. Die Probenahmevorrichtung 100 enthält wiederum die Aufnahme 9 als Spreizaufnahme für die Ausnehmung 8d des Verschließteiles 8, die jedoch hier durch einen in einem auf dem Adapter 3 sitzenden Gehäuse 31 enthaltenen Antrieb, beispielsweise einen Elektromotor oder einen hydraulischen bzw. pneumatischen Antrieb, betätigt wird. Der Aufnahme 9 liegt mit Spalt 4 (mit einem Deckel 4a verschließbar) ein weiterer Träger 32 gegenüber, der mit dem Befestigungsflansch 16 gemäß Fig. 1 versehen ist und die Befüll-und Entleerungseinrichtung 17 mit dem Rohrabschnitt 19, den Anschlüssen 22 und 23, dem Handventil 20 und der Auslauföffnung bzw. dem Auslaufflansch 21 enthält. Auch der Träger 32 ist mit der Klammer 15 versehen, mit der der Spund 7 in üblicher Weise am Befestigungsflansch 16 gehalten wird. Wie angedeutet, ist der Befestigungsflansch 16 und die Klammer 15 in einer Öffnung 32a des Trägers 32 angeordnet, sodass der Beutel 27 mit seinem Spund 7 in die Öffnung 32 eingesteckt und dort zunächst bis zum Befestigen provisorisch gehalten werden kann.

An der Oberseite des Gehäuses 31 sind eine Vielzahl von Bedienelementen 33 angeordnet, mit denen beispielsweise die Aufnahme 9 geschlossen und geöffnet bzw. axial verschoben werden kann, mit denen beispielsweise die Ventile 22 und 23 betätigt werden können oder andere Funktionen durchgeführt werden können. Diese anderen Funktionen umfassen beispielsweise die Verkippung des Behälters 26 um die Achse 29' und/oder das Einleiten von Inertgas, entweder über den Anschluss 21 oder eines der Ventile 22, 23 oder einen gesonderten Anschluss, in den Beutel 27 während der Entleerung, damit sichergestellt wird, dass sich der Beutel 27 an die Wände des Behälters 26 anlegt und ohne Luft nachzuziehen steril entleert werden kann.

Für eine Probenahme mit der Probenahmevorrichtung 100 wird zunächst der Deckel des Behälters 26 durch den Adapter 30 ersetzt. Dann wird der Deckel 4a des Spaltes 4 geöffnet und der Trichterdom 27a manuell aus dem Behälter 26 geholt und mit seinem Spund 7 in die Öffnung 32a des Trägers 32 eingehängt und anschließend mit Hilfe der Klammer 15 manuell oder über den nicht gezeigten Antrieb betätigt, am Befestigungsflansch 16 angedockt. Die Aufnahme 9 wird über den Antrieb in die Ausnehmung 8d verfahren und dort festgeklemmt. Dann kann, wie auch beim ersten Ausführungsbeispiel, eine Sterilisierung stattfinden, worauf anschließend der Beutel durch Herausziehen des Verschließteils 8 aus dem Spund 7 geöffnet wird. Dann wird Inertgas (Stickstoff oder Kohlendioxid) oder Sterilluft oder ein anderes geeignetes Mittel mit einem Überdruck von 10-15 mbar in den Beutel 27 eingeleitet und der Behälter 26 um die Achse 29' verkippt, bis Produkt aus dem Auslauf 21, nach Öffnen des Handventils 20, in einen geeigneten Auffangbehälter oder eine steril angedockte Leitung oder einen angedockten weiteren Beutel fließen kann.

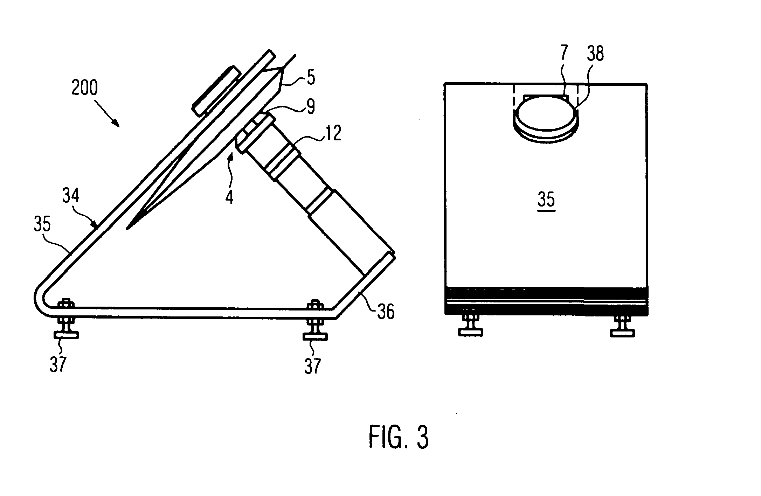

Fig. 3 zeigt ein weiteres Ausführungsbeispiel einer als Laborgerät ausgebildeten erfindungsgemäßen Probenahmevorrichtung, die einen Beutelständer 34 aufweist, der im dargestellten Ausführungsbeispiel eine für eine bequeme Handhabung geneigte Vorderwand 35 eine gegenüberliegende Abstützwand 36 und Füße 37 aufweist, die bevorzugt nivellierbar sind. Die Vorderwand 35 enthält eine kreisförmige Öffnung 38 oder, wie gestrichelt angedeutet, einen nach oben offenen Schlitz, in den der Spund 7, gegebenenfalls gesichert durch einen Schraubring, eines Beutels 5 eingesetzt werden kann. Der Öffnung 37 mit Spalt 4 gegenüberliegend ist die bereits beschriebene Aufnahme 9 vorgesehen, die über eine Spindel 12 manuell oder mittels eines nicht gezeigten Motors in die Ausnehmung 8d des Verschlussteiles 8 eingebracht und dort verankert werden kann. Durch Zurückziehen der Spindel 12 wird dann der Beutel 5 geöffnet und eine Produktprobe kann entnommen werden. Anschließend kann, wie auch bei den anderen Ausführungsbeispielen, die Abdeckung 22 aufgebracht werden.

In Abwandlung der beschriebenen und gezeichneten Ausführungsbeispiele können anhand der Zeichnungen gezeigte Einzelheiten unter den Ausführungsbeispielen ausgetauscht werden. Die Halteeinrichtungen für den Spund und das Verschließteil können jede geeignete Konstruktion aufweisen.

## Patentansprüche

1. Probenahmevorrichtung (1, 100, 200) zum Entnehmen von Proben aus und/oder in einen Beutel (5, 27), der eine mit einem Spund (7) versehene Öffnung (6) und ein Verschlussteil (8) aufweist, das derart angeordnet ist, dass die Öffnung (6) von der Innenseite des Beutels (5, 27) her zu öffnen und zu schließen ist, **gekennzeichnet durch** eine Einrichtung zum Öffnen und Wiederverschließen der Öffnung (6), die jeweils eine Halteeinrichtung (2, 3) für den Spund (7) und das Verschlussteil (8) aufweist, die unter Freihaltung eines den Beutel (5, 27) aufnehmenden Spaltes (4) miteinander verbunden und über einen Betätigungsmechanismus relativ zueinander bewegbar sind.

2. Probenahmevorrichtung nach Anspruch 1, **dadurch gekennzeichnet, dass** der Betätigungsmechanismus ein axial verschiebbares Element (12) enthält, das mit einer der Halteeinrichtungen (2) mitnehmend verbunden ist.

3. Probenahmevorrichtung nach Anspruch 1 oder 2, **dadurch gekennzeichnet, dass** eine der Halteeinrichtungen (3) mit einem Entleerungs- und/oder Befüllstutzen (17) für die Probe in Fließverbindung steht, der mit einer Sterilisationsvorrichtung (22, 23) versehen ist.

4. Probenahmevorrichtung nach einem der Ansprüche 1 bis 3, **dadurch gekennzeichnet, dass** die erste Halteeinrichtung (2) eine spreizbare Aufnahme (9) für eine im Verschlussteil (8) vorgesehene Vertiefung (8d) enthält.

5. Probenahmevorrichtung nach einem der Ansprüche 1 bis 4, **dadurch gekennzeichnet, dass** die zweite Halteeinrichtung (3) einen mit einer Klammer (15) am Spund (7) fixierbaren Befestigungsflansch (16) enthält.

6. Probenahmevorrichtung nach einem der Ansprüche 1 bis 5, **gekennzeichnet durch** die Ausbildung als Handgerät, bei dem wenigstens eine der Halteeinrichtungen (2, 3) manuell am Beutel (5) fixierbar ist und der Betätigungsmechanismus ein manuell verschiebbares Element (12) enthält, das mit einer der Halteeinrichtungen (3) verbunden ist.

7. Probenahmevorrichtung nach Anspruch 6, **dadurch gekennzeichnet, dass** das verschiebbare Element (12) mit einer spreizbaren Aufnahme (9) für eine im Verschlussteil (8) vorgesehene Vertiefung (8d) verbunden ist, die über eine Verdrehbewegung des Elements (12) zu öffnen und zu schließen ist.

8. Probenahmevorrichtung nach Anspruch 6 oder 7, **dadurch gekennzeichnet, dass** eine Arretierungseinrichtung (13) zum Arretieren einer Verschiebestellung vorgesehen ist.

9. Probenahmevorrichtung nach einem der Ansprüche 1 bis 5, **gekennzeichnet durch** die Ausbildung als kraftbetätigtes Gerät, wobei der Betätigungsmechanismus eine erste über einen Antrieb verschiebbare und eine zweite ortsfeste Halteeinrichtung (2, 3) aufweist.

10. Probenahmevorrichtung nach Anspruch 9, **dadurch gekennzeichnet, dass** die zweite, ortsfeste Halteeinrichtung (3) eine mit einer Klammer (15) versehene Einstecköffnung (32a) für den Spund (7) enthält.

11. Probenahmevorrichtung nach Anspruch 10, **dadurch gekennzeichnet, dass** die Einstecköffnung (32a) mit einem Entleerungs- und/oder Befüllstutzen (17) in Fließverbindung steht.

12. Probenahmevorrichtung nach einem der Ansprüche 9 bis 11, **dadurch gekennzeichnet, dass** das kraftbetätigte Gerät einen Adapter (30) zum Anbringen an einem den Beutel (27) enthaltenden Behälter (26) aufweist.

13. Probenahmevorrichtung nach einem der Ansprüche 1 bis 5, **gekennzeichnet durch** einen Probenahmeständer (34) in dem beide Halteeinrichtungen (2, 3) relativ zueinander verschiebbar befestigt sind.

14. Beutel (5, 27), insbesondere für ein Probenahmevorrichtung nach einem der Ansprüche 1 bis 13, mit einem mit einer steril haltenden Abdeckung (22) verschließbaren Spund (7).

15. Abdeckung (22) für einen Beutel (5, 27) nach Anspruch 14, enthaltend eine mit Desinfektionsmittel getränkte Einlage (24).
